# EUROPEAN PATENT APPLICATION

(11) **EP 2 852 161 A1**
(43) Date of publication of application: **25.03.2015**
(21) Application number: 13809884.3
(22) Date of filing: 27.06.2013
(51) Int. Cl.: H04N 13/00, G06T 7/00, G01C 11/00

(54) **METHOD AND DEVICE FOR IMPLEMENTING STEREO IMAGING**

(30) Priority: 28.06.2012 CN 201210218383
(71) Applicant: ZTE Corporation, Shenzhen, Guangdong 518057 (CN)
(72) Inventor: WU, Shaohua, Shenzhen Guangdong 518057 (CN); LIU, Yi, Shenzhen Guangdong 518057 (CN); ZHU, Xiang, Shenzhen Guangdong 518057 (CN)
(74) Representative: Lampis, Marco
(86) International application number: PCT/CN2013/078167
(87) International publication number: WO 2014/000663

(57) **Abstract**

A method and device for implementing stereo imaging. The method includes: capturing image data; segmenting objects in the captured image data to distinguish different objects; measuring distances between various objects and a camera; generating a scene depth information map according to the measured distances; converting to a stereo image by using the scene depth information map and the original captured image; outputting the stereo image. By means of the embodiment of the present invention, 3D image shooting may be implemented with a single camera.

## Description

### Technical Field

The present invention relates to the field of mobile communication and image processing, and more particularly, to a method and device for implementing stereo (3D) imaging with a single camera.

### Background of the Invention

Currently, with the popularity of smart phones, the requirements of vast user communities on mobile terminals are not satisfied with only traditional voice calls any more, and the demands for multimedia applications are becoming increasingly intense. Meanwhile, with the development progress of the image processing technology, 3D shooting and displaying technologies are becoming mature, and electronic devices based on this technology have gradually entered into public life. With 3D shooting and displaying, users can easily use 3D imaging technology to record meaningful scenes and add new funs for life.

However, currently the 3D shooting uses two cameras to simulate human eyes to shoot scenes of left and right eyes. At present, there are two arrangements of the two cameras, one is parallel in horizon and the other is vertically up and down. A distance between them is generally similar to a distance between pupils of human eye, which is 60-65 mm, and the distance between the two cameras can be adjusted according to the close-range or far-range vision during the shooting. A very important issue is to ensure the consistency of apertures, focal lengths and brightness of the two cameras, otherwise the human eyes will feel discomfort when viewing the two shoot-out scenes. In addition, the price of a mobile phone with 3D camera is high, and the vast majority of mobile phones now have a common single camera rather than a 3D camera. Therefore, it cannot take images with 3D effects.

### Summary of the Invention

To solve the technical problem, the embodiments of the present invention provide a method and device for implementing stereo (3D) imaging so as to achieve 3D image shooting with a single camera.

In order to solve the abovementioned technical problem, the embodiment of the present invention provides a method for implementing stereo (3D) imaging, comprising:
capturing an image;
segmenting objects in the captured image to distinguish different objects;
measuring distances between various objects and a camera;
generating a scene depth information map based on the measured distance;
using the scene depth information map and the originally captured image to convert the originally captured image into a 3D image;
outputting the 3D image.

Alternatively, segmenting objects in the captured image to distinguish different objects comprises:
encoding data of the captured image to obtain key frames of the image;
segmenting the key frames to separate the various objects in the image.

Alternatively, measuring distances between various objects and a camera comprises:
extracting key feature information of the various objects distinguished from the captured image;
measuring the distance between the various objects and the camera according to the key feature information of the various objects.

Alternatively, using the scene depth information map and the originally captured image to convert the originally captured image to a 3D image comprises:
using a depth 3D conversion algorithm to convert the originally captured image to a 3D image, wherein the depth 3D conversion algorithm comprises: depth-image-based rending technology or structure from motion technology.

To solve the abovementioned problem, the embodiment of the present invention further provides a device for implementing 3D imaging, comprising:
an image capturing module, configured to capture an image;
an image segmenting module, configured to segment objects in the captured image to distinguish different objects;
a ranging module, configured to measure distances between various objects and a camera;
an image information processing module, configured to generate a scene depth information map according to the measured distance information;
an image converting module, configured to convert the originally captured image to a 3D image according to the scene depth information map and the originally captured image;
an image outputting module, configured to output the 3D image.

Alternatively, the image segmenting module comprises:
a first unit, configured to encode data of the captured image to obtain key frames of the image;
a second unit, configured to segment the key frames to separate the various objects in the image.

Alternatively, the ranging module comprises:
a first unit, configured to extract key feature information of the various objects distinguished from the captured image;
a second unit, configured to, measure the distances between the various objects and the camera according to the key feature information of the various objects.

Alternatively,
the image converting module is configured to achieve a 3D image conversion with a depth 3D conversion algorithm; the depth 3D conversion algorithm comprises: depth-image-based rendering technology or structure from motion technology.

In summary, the embodiment of the present invention provides a method and device for implementing 3D imaging so as to implement 3D image shooting with a single camera.

### Brief Description of the Drawings

FIG. 1 is a flow chart of a method for implementing 3D imaging in accordance with an embodiment of the present invention;
FIG. 2 is a schematic diagram of a device for implementing 3D imaging in accordance with an embodiment of the present invention.

### Preferred Embodiments of the Invention

Hereinafter in conjunction with the accompanying drawings, the embodiments of the present invention will be described in detail. It should be noted that, in the case of no conflict, the embodiments and features in the embodiments of the present application may be arbitrarily combined with each other.

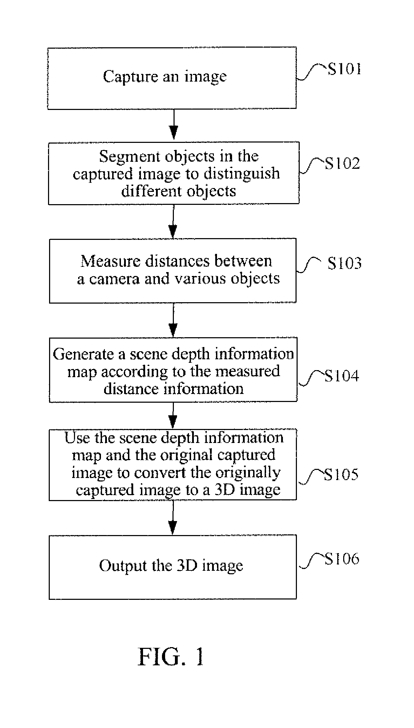

FIG. 1 is a flow chart of a method for a mobile terminal with a single camera implementing stereo image shooting in accordance with an embodiment of the present invention, and as shown in FIG. 1, the method of the present embodiment comprises the following steps:

In step 101, it is to capture an image;

Firstly, it is to turn on the camera, then it is to capture an image of the scene which needs to be shot by the camera, encode the image, and send the key frames to the image segmenting module;

the frame in the present embodiment refers to the smallest unit of a single image in animation, and it is equivalent to one scene on the filmstrip. The frame represents a grid or marker on the timeline of the animation software. The key frame is equivalent to an original painting in two-dimensional animation, which refers to a frame in which the key action of a character or object motion or change is located, and it is often called 1-frame in video encoding. The animations between key frames can be generated by software tools, and are called transitional or intermediate frames, and there are B and P frames;
in step 102, it is to segment the objects in the captured image to distinguish different objects;
the image segmenting module processes the key frames transferred by the camera, and uses an image segmentation algorithm to segment these key frames to separate various objects in the scene, for example, separating the scenes and background in the image, and for a given single-view planar image, firstly it needs to analyze the image information such as brightness, chromaticity, edge information, and so on to extract the foreground and background from the image; then extract the key feature information points such as the contours of the objects in the image, and output the key feature information (including information of the above mentioned key information points in the objects) of these objects to the ranging module;
the typical image segmentation algorithms contain threshold method, edge detection method and region method, and many other algorithms are obtained by improving the typical image segmentation algorithms. The most commonly used threshold segmentation methods are: bimodal curve fitting, maximum entropy segmentation method, inter-class variance threshold segmentation method and a fuzzy threshold segmentation method. The edge detection method is the most common intermittent gray detection method which usually uses the first-order and second-order derivatives to detect edges.

In Step 103, it is to measure the distances between the camera and various objects;
the ranging module receives the key feature information of the objects transferred in the step 102, starts to measure the distance, and measures the distances of the key information points of these objects to calculate out distances between the camera and the objects to be measured;
the depth information thereof is extracted through the different features of the various parts or objects in the image, for example, some scenes in the image are close to the camera lens, and some others are away from the camera lens so that they have different depth information, and they need to be given different depth values when generating a depth map;

The are a variety of methods for measuring the distances between the objects and the camera, for example, installing a laser emitting device in the vicinity of the mobile phone camera, and measuring the distances for various objects in the image by sequentially aligning the laser, for example, measuring the distances by aligning several key information points of various objects in the image to take an average, or measuring the distances by aligning the geometric centers of various objects in the image; or calculating the distances between various objects and the camera through the focal length of the camera lens and camera imaging;

In step 104, it is to generate the scene depth information map according to the distance information measured in step 103;

In step 105, it is to use the scene depth information map and the original image, and combine with the depth 3D conversion algorithm, to implement the conversion from 2D to 3D and achieve 3D imaging;

In this embodiment, the depth 3D conversion algorithm can use depth-image-based rendering (referred to as DIBR) technology or Structure from Motion (referred to as SFM) technology to reproduce the original and true 3D scene.

In general, for the double-viewpoint 3D rendering, the original view is called a left view, and the newly generated view is a right view. Since the newly generated right view is rendered from the left view and the depth map, there is a parallax between left and right views, and the 3D effect can be seen on the 3D display device.

In Step 106, it is to output the 3D image obtained after conversion.

This method obtains the depth information in the shot scenes by processing the information of the objects in the shot scenes and measuring the distances between these objects and the camera with the ranging technique, and then uses the corresponding conversion algorithm to 3D convert the captured image; thereby using an ordinary camera to shoot images with 3D effect. It can achieve 3D shooting which needs two cameras to achieve in the past.

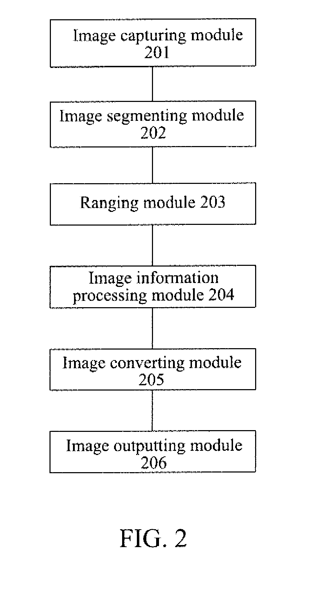

FIG. 2 is a schematic diagram of a device for implementing 3D imaging using a single camera in accordance with an embodiment of the present invention, as shown in FIG. 2, the device comprises: an image capturing module 201, an image segmenting module 202, a ranging module 203, an image information processing module 204, an image converting module 205, and an image outputting module 206, wherein,
the image capturing module 201 is configured to capture the scenes that need to be shot, and the image capturing module is generally a camera;
the image segmenting module 202 is configured to preliminarily process data of the images captured by the image capturing module, segment the objects in the captured image to distinguish different objects;
the image segmenting module 202 comprises a first unit and a second unit, wherein the first unit is configured to encode the data of the captured image to obtain key frames of the image; the second unit is configured to segment the key frames to separate the various objects in the image;
the ranging module 203 is configured to measure the distances between the camera and various objects according to the objects separated by the image segmenting module;
the ranging module 203 comprises a first unit and a second unit, wherein the first unit is configured to extract the key feature information of various objects distinguished from the captured image; the second unit is configured to measure the distances between the camera and the various objects according to the key feature information of the various objects;
the image information processing module 204 is configured to calculate the depth information in the entire scene and generate the scene depth information map according to the distances of various objects measured out by the ranging module;
the image converting module 205 is configured to convert the originally captured image to a 3D image according to the scene depth information map and the originally captured image;
the image outputting module 206 is configured to output the 3D image obtained after conversion.

Because people have visual experience and memory, these factors constitute the human eye's psychological stereoscopic vision. When the human eyes are watching a flat color stereo image, the content in the image can be used to judge the distance relationships between objects and characters, and usually this judgment is very accurate, indicating that although depth information which can be identified by physiological stereoscopic vision such as the binocular vision differences of the human does not exist in the planar image, there are other depth cues, such as motion parallax, focus/defocus, linear perspective, atmospheric scattering, shadows, occlusion, relative height and relative size, and so on. These cue information is stereoscopic visual memory and experience obtained by the human observing the natural scenery in a long term, and relying on this visual memory and experience, the observer can accurately extract relative position and relative depth between objects from the planar image, this kind of stereo vision of human eyes is called psychological stereoscopic vision. In accordance with this feature of the human eyes, if the depth information of the planar image is extracted and then combined with the original left view to render out the right view, there is parallax between the rendered-out right view and the original left view, the two views are rendered and form a stereo image with 3D effect on the 3D displaying device.

Therefore, with this principle, the previously obtained depth information can be used to convert a 2D image into a 3D image with a conversion algorithm.

The image outputting module reprocesses and outputs the converted key frames and non-key frames.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention, and of course, the present invention may also have other various embodiments, and a person skilled in the art can make various corresponding changes and modifications according to the embodiments of the present invention without departing from the spirit and essence of the present invention, and all these changes and modifications should belong to the protection scope of the appended claims of the present invention.

### Industrial Applicability

The embodiments of the present invention provide a method and device for implementing 3D imaging so as to achieve 3D image shooting with a single camera.

## Claims

1. A method for implementing stereo (3D) imaging, comprising:
capturing an image;
segmenting objects in the captured image to distinguish different objects;
measuring distances between various objects and a camera;
generating a scene depth information map based on the measured distance;
using the scene depth information map and the originally captured image to convert the originally captured image into a 3D image;
outputting the 3D image.

2. The method of claim 1, wherein segmenting objects in the captured image to distinguish different objects comprises:
encoding data of the captured image to obtain key frames of the image;
segmenting the key frames to separate the various objects in the image.

3. The method of claim 1, wherein measuring distances between various objects and a camera comprises:
extracting key feature information of the various objects distinguished from the captured image;
measuring the distances between the various objects and the camera according to the key feature information of the various objects.

4. The method of any one of claims 1-3, wherein using the scene depth information map and the originally captured image to convert the originally captured image to a 3D image comprises:
using a depth 3D conversion algorithm to convert the originally captured image to a 3D image, wherein the depth 3D conversion algorithm comprises: depth-image-based rending technology or structural from motion technology.

5. A device for implementing 3D imaging, comprising:
an image capturing module, configured to capture an image;
an image segmenting module, configured to segment objects in the captured image to distinguish different objects;
a ranging module, configured to measure distances between various objects and a camera;
an image information processing module, configured to generate a scene depth information map according to the measured distance information;
an image converting module, configured to convert the originally captured image to a 3D image according to the scene depth information map and the originally captured image;
an image outputting module, configured to output the 3D image.

6. The device of claim 5, wherein the image segmenting module comprises:
a first unit, configured to encode data of the captured image to obtain key frames of the image;
a second unit, configured to segment the key frames to separate the various objects in the image.

7. The device of claim 5, wherein the ranging module comprises:
a first unit, configured to extract key feature information of the various objects distinguished from the captured image;
a second unit, configured to, measure the distances between the various objects and the camera according to the key feature information of the various objects.

8. The device of any one of claims 5-7, wherein
the image converting module is configured to achieve a 3D image conversion with a depth 3D conversion algorithm; the depth 3D conversion algorithm comprises: depth-image-based rendering technology or structure from motion technology.
